# EUROPÄISCHE PATENTSCHRIFT

(11) **EP 3 449 868 B1**
(45) Veröffentlichungstag und Bekanntmachung des Hinweises auf die Patenterteilung: **30.09.2020**
(21) Anmeldenummer: 18000679.3
(22) Anmeldetag: 16.08.2018
(51) Int. Cl.: A61C 8/00

(54) **ANORDNUNG VON EINEM AUFSATZELEMENT AUF EINEM IMPLANTATKÖRPER**
ARRANGEMENT OF A CAP ELEMENT ON AN IMPLANT BODY
MISE EN PLACE D'UN ÉLÉMENT RAPPORTÉ SUR UN CORPS D'IMPLANT

(30) Priorität: 02.09.2017 DE 102017008261
(43) Veröffentlichungstag der Anmeldung: 06.03.2019
(73) Patentinhaber: Champions-Implants GmbH, 55237 Flonheim (DE)
(72) Erfinder: Bomba, Norbert, D-65197 Wiesbaden (DE)
(74) Vertreter: Eickmeyer, Dietmar

(56) Entgegenhaltungen:
- WO-A1-2016/070875
- US-A1- 2011 244 424
- US-A1- 2014 356 813

## Beschreibung

Die Erfindung betrifft eine Anordnung, umfassend einen Implantatkörper und ein Aufsatzelement, wobei der Implantatkörper derart komplementär zum Aufsatzelement ausgebildet ist, dass das Aufsatzelement in den Implantatkörper abschnittsweise bis zu einer Anschlagfläche am Implantatkörper einsetzbar ist, wobei das Aufsatzelement mit einem Verbindungselement mit dem Implantatkörper verbunden ist.

Aus dem Stand der Technik ist es bekannt, einen Implantatkörper mit Hilfe eines Werkzeugs in den Kieferknochen eines Menschen einzuschrauben, um fehlende Zahnwurzeln zu ersetzen. Nach dem Einsetzen des Implantatkörpers in den Kieferknochen wird der Implantatkörper üblicherweise durch eine Abdeckschraube verschlossen, um das Eindringen von Keimen zu verhindern. Die Anordnung aus Implantatkörper und Abdeckschraube verbleibt für eine bestimmte Zeit ohne weitere Bearbeitung im Kiefer des Patienten, um ein Verwachsen des Kieferknochens mit dem Implantatkörper zu ermöglichen. Später wird die Abdeckschraube vom Implantatkörper gelöst und stattdessen ein sogenannter Gingivaformer auf den Implantatkörper aufgesetzt. Der Gingivaformer soll das Zahnfleisch auf die Aufnahme eines Zahnersatzes vorbereiten. Der Gingivaformer ist üblicherweise in seiner Form an den später aufzusetzenden Zahnersatz angepasst und bewirkt eine entsprechende Formung des Zahnfleisches. In einem weiteren Behandlungstermin wird ein Abdruck vorgenommen. Hierzu wird der Gingivaformer durch einen sogenannten Abdruckpfosten ersetzt. So kann in einem zahnmedizinischen Labor die Position des späteren Zahnersatzes im Kiefer nachgestellt werden und der Zahnersatz kann zum Aufsetzen auf den Implantatkörper vorbereitet werden. In einem weiteren Termin wird der im Labor vorgefertigte Zahnersatz aufgesetzt. Hierfür wird zunächst auf den eingeschraubten Implantatkörper ein sogenanntes Abutment aufgesetzt und im Implantatkörper verankert, nämlich bevorzugt verschraubt. Auf das Abutment wird in einem letzten Arbeitsschritt der künstliche Zahnersatz abschließend aufgesetzt. Bei den vorstehenden Arbeitsschritten ist insbesondere darauf zu achten, dass ein Eindringen von Keimen in das Innere des Implantatkörpers vermieden wird.

Dazu ist es allgemein bekannt, dass die verschiedenen Aufsätze, die zum Einbringen in den Implantatkörper vorgesehen sind, nur bis zu einer vorgebbaren Tiefe in diesen eingeschraubt werden. Dazu ist üblicherweise am Implantatkörper ein Anschlag mit einer Anschlagfläche angebracht, bis zu der eine korrespondierende Fläche eines Aufsatzes eingeschraubt wird. Auf diese Weise sitzt der Aufsatz an einer konstruktiv vorgegebenen Position.

Das Dokument US 2011/244424 A1 betrifft ein mehrteiliges Zahnimplantat mit wenigstens einem proximalen Implantatsteil und einem distalen Implantatsteil, die so miteinander zu verbinden sind, dass sich im verbundenen Zustand der beiden Implantatsteile eine Verbindungsstelle ergibt. Zwischen den beiden Implantatsteilen ist ein ringförmiges Dichtelement vorgesehen.

Um die Dichtwirkung an der Anschlagfläche zwischen einem Implantatkörper und einer Verlängerungsbuchse zu verbessern und damit das Eindringen von Keimen sicherer zu vermeiden, schlägt die EP 0893 105 B1 vor, eine Flachdichtung an der Anschlagfläche zwischen dem Implantatkörper der Verlängerungsbuchse zwischen zu fügen. Nachteilig dabei ist es, dass die Dichtkraft nur in axialer Richtung wirkt und zudem die axiale Position des Aufsatzes relativ zum Implantatkörper durch das Zwischenfügen der Fachdichtung verändert wird. Zudem ist die axiale Position des Aufsatzes in unerwünschter und nachteiliger Weise veränderlich, je nachdem, mit welchem Moment der Aufsatz gegen die Dichtung und den Implantatkörper festgeschraubt wird.

Ausgehend von diesem Stand der Technik ist es Aufgabe der Erfindung, eine Anordnung von einem Implantatkörper und einem Aufsatzelement anzugeben, der die axiale Position des Aufsatzelements relativ zum Implantatkörper möglichst genau vorgibt und zudem eine möglichst gute Dichtwirkung aufweist.

Die Aufgabe wird gelöst durch eine Anordnung der eingangs genannten Art. Demgemäß umfasst die erfindungsgemäße Anordnung einen Implantatkörper und ein Aufsatzelement, wobei der Implantatkörper derart komplementär zum Aufsatzelement ausgebildet ist, dass das Aufsatzelement in den Implantatkörper abschnittsweise bis zu einer Anschlagfläche am Implantatkörper einsetzbar ist, wobei das Aufsatzelement mit einem Verbindungselement mit dem Implantatkörper verbunden ist, und dadurch gekennzeichnet ist, dass das durch das Verbindungselement eine Aufsatzelementanschlagfläche des Aufsatzelements gegen die Anschlagfläche gehalten ist, dass der Implantatkörper eine erste Dichtfläche aufweist, die einer zweiten Dichtfläche des Aufsatzelements gegenübergelegen ist, dass die erste Dichtfläche oder die zweite Dichtfläche einen Dichtungssitz aufweist, in den ein Dichtungselement eingesetzt ist, durch das das Innere des Implantatkörpers gegen die Umgebung abgedichtet ist, dass die Anschlagfläche als Implantatkörperdichtfläche und die Aufsatzelementanschlagfläche als Aufsatzelementdichtfläche ausgestaltet sind, so dass das Innere des Implantatkörpers gegen die Umgebung abgedichtet ist, und dass die Implantatkörperdichtfläche als konisch verlaufende Implantatkörperdichtfläche ausgestaltet ist, welche derart an die als konisch verlaufend ausgestaltete Aufsatzelementdichtfläche anlegbar ist, dass das Innere des Implantatkörpers gegen die Umgebung abgedichtet ist.

Nach der erfindungsgemäßen Lehre sind der Anschlag und die Dichtung an unterschiedlichen Stellen angeordnet. Durch das Einsetzen des Aufsatzelements in den Implantatkörper bis zum Anschlag am Implantatkörper wird das Aufsatzelement exakt an einer konstruktiv vorgegebenen Stelle positioniert. Dabei berühren sich die Aufsatzelementanschlagfläche und die Anschlagfläche unmittelbar, d.h. ohne Zwischenfügung eines weiteren Bauteils, zum Beispiel einer Dichtung. Auf diese Weise ist die axiale Position des Aufsatzelements relativ zu Implantatkörper sehr genau vorgebbar, also zum Beispiel nur noch der Maßungenauigkeit von Fertigungstoleranzen bei der Herstellung des Aufsatzelements oder des Implantatkörpers unterworfen. Durch das Verbindungselement ist die sichere Positionierung und Fixierung der Aufsatzelementanschlagfläche gegen die Anschlagfläche gewährleistet.

Das Aufsatzelement ist insbesondere ein Gingivaformer, ein Abdruckpfosten, ein Abutment, eine Abdeckung oder eine Abdeckschraube, die, wie vorstehend beschrieben, zu verschiedenen Stadien einer Behandlung beim Zahnarzt vom Einsetzen des Implantats in den Kiefer bis zum Anbringen des Zahnersatzes auf ein Abutment, das zum Verbinden mit dem Implantatkörper vorgesehen ist, zur Verfügung stehen.

Das Verbindungselement zum Verbinden des Aufsatzelements mit dem Implantatkörper ist vorzugsweise eine Schraube. Es kann aber auch neben anderen denkbaren Verbindungselementen ein Gewindestück sein, das einstückig am Aufsatzelement angebracht, herausgearbeitet oder angeformt ist.

Des Weiteren sieht die erfindungsgemäße Anordnung vor, dass die Dichtung oder das Dichtungssystem ein Dichtungselement und einen Dichtungssitz aufweist. Dabei ist vorteilhafterweise der Dichtungssitz entweder im Aufsatzelement oder Implantatkörper angeordnet, also entweder in der ersten beziehungsweise als Teil der ersten oder zweiten Dichtfläche. Die in den Dichtungssitz eingebrachte Dichtung ist so bemessen, dass das Innere des Implantatkörpers gegen die Umgebung abgedichtet ist. Das verhindert das Eindringen von Keimen, ohne dass die axiale Positionierung des Aufsatzelements gegenüber dem Implantatkörper hierdurch beeinträchtigt oder veränderlich ist.

Eine vorteilhafte Ausgestaltung der erfindungsgemäßen Anordnung sieht vor, dass die Dichtung von der ersten Dichtfläche und der zweiten Dichtfläche vollständig umschlossen ist. Auf diese Weise ist das Dichtungssystem aus Dichtung, erster und zweiter Dichtfläche auf besonders einfache Weise konstruierbar und durch die Art oder Form der Dichtung die Dichtheit definierbar.

Besonders vorteilhaft ist es, wenn das Dichtungselement ein O-Ring oder ein Dichtring mit einem in etwa keilförmigen Querschnitt ist, und dass der Dichtungssitz eine ringförmige Nut ist, deren Querschnittsfläche auf das Dichtungselement angepasst ist.

So kommen zum Beispiel Querschnittsflächen für einen O-Ring in Betracht, die insbesondere quadratisch, rechteckig, kreisabschnittsförmig oder ovalabschnittsförmig sind. Auch die Querschnitte des O-Rings selbst sind nicht zwangsläufig kreisförmig, sondern können auch oval oder elliptisch sein oder andere Formen annehmen. Um eine gewünschte Dichtwirkung zu erzielen, ist der Abstand zwischen dem Nutgrund und der Nutöffnung geringer, als der Durchmesser des O-Rings in der entsprechenden Richtung des besagten Abstandes. Auf diese Weise steht der O-Ring über die Nutöffnung hinaus und ist durch das Verbinden des Aufsatzelements mit dem Implantatkörper so verformbar, dass eine ausreichende Dichtwirkung gegen das Eindringen von Keimen in das Innere des Implantatkörpers vorhanden ist. Der Abstand zwischen der ersten und zweiten Dichtfläche ist konstruktiv entsprechend bemessen.

Bei einem Dichtring mit keilförmigen Querschnitt besteht der Vorteil, dass durch das Einsetzen des Aufsatzelements in den Implantatkörper bzw. das Verbinden mit dem Implantatkörper die auf den Dichtring eingebrachten Kräfte flächig eingebracht werden, da entweder die erste oder die zweite Dichtfläche auf eine Seitenfläche des Dichtrings wirkt. Die Dicht- beziehungsweise Dichtungsfläche ist in vorteilhafterweise vergrößert.

Zudem ist es vorteilhaft, wenn bei der erfindungsgemäßen Anordnung die Form des Dichtungssitzes und die Form des Dichtungselements so aufeinander angepasst sind, dass eine elastische Verformung des Dichtungselements bei einem Zusammenbau von Implantatkörper und Aufsatzelement gewährleistet ist, und dass durch die elastische Verformung die Dichtkraft in axialer und/oder in radialer Richtung in den Implantatkörper und in das Aufsatzelement eingebracht ist. Hierdurch ist eine verbesserte Dichtwirkung erreicht.

Weiterhin ist es günstig, wenn durch das Verbinden des Aufsatzelements mit dem Implantatkörper die Dichtkraft aufbringbar ist.

Bei der erfindungsgemäßen Anordnung ist es außerdem vorgesehen, dass durch die Materialwahl des Dichtungselements und/oder die Anpassung der Größe und/oder Form des Dichtungssitzes auf das Dichtungselement und/oder die Anpassung der Größe oder Form des Dichtungselements auf den Dichtungssitz eine gewünschte Dichtkraft vorgebbar ist. Hierdurch erhält die Anordnung einen hohen konstruktiven Freiheitsgrad, wie die Dichtkraft vorgebbar ist, insbesondere durch eine mögliche Kombination aus Materialwahl, Größe und Form sowohl des Dichtungssitzes als auch des Dichtungselement.

Dazu sieht die erfindungsgemäße Anordnung auch vor, dass die Dichtung aus Polyetheretherketon oder aus Polyetherketonketon gefertigt ist.

Eine vorteilhafte Weiterbildung der erfindungsgemäßen Anordnung ist dadurch gekennzeichnet, dass der Implantatkörper und das Aufsatzelement formschlüssig miteinander verbindbar sind, so dass bei einer Drehung des Aufsatzelements eine Drehung des Implantatkörpers erfolgt. Hierdurch ist die radiale Position des Aufsatzelements relativ zum Implantatkörper vorgebbar. Diese Position ist unabhängig vom Vorgang des Verbindens von Aufsatzelement und Implantatkörper. Das Verbindungselement, beispielsweise eine Schraube, sorgt allein für eine sichere Verbindung der beiden Bauelemente.

Eine besonders vorteilhafte Ausgestaltung der erfindungsgemäßen Anordnung ist dadurch gekennzeichnet, dass die Anschlagfläche als Implantatkörperdichtfläche und die Aufsatzelementanschlagfläche als Aufsatzelementdichtfläche ausgestaltet sind, so dass das Innere des Implantatkörpers gegen die Umgebung abgedichtet ist.

Auf diese Weise sind zwei Dichtsysteme realisiert, die eine besonders gute Gesamtdichtwirkung erzielen. Zudem kann das Dichtsystem Anschlagfläche / Implantatkörperdichtfläche bereits für eine gute Dichtung sorgen, um das Eindringen von Keimen in das Innere des Implantatkörpers zu verhindern. Zum anderen sorgt das Dichtelement auch bei Mikrobewegungen dafür, dass das Innere des Implantatkörpers vor einer Kontamination mit Keimen geschützt ist. Dabei sind Mikrobewegungen zum Beispiel solche vergleichsweise kleinen radialen Bewegungen des Aufsatzelements gegenüber Implantat, die durch Kräfte aufgrund von Kau- oder Beißkräften auf das Aufsatzelement beziehungsweise auf die Anordnung von Aufsatzelement und Implantatkörper wirken.

Besonders vorteilhaft ist es, wenn die Implantatkörperdichtfläche als konisch verlaufende Implaritatkörperdichtfläche ausgestaltet ist, welche derart an die als konisch verlaufend ausgestaltete Aufsatzelementdichtfläche anlegbar ist, dass das Innere des Implantatkörpers gegen die Umgebung abgedichtet ist. Durch die konischen Formen wird die Dichtwirkung in jeden der beiden Dichtsysteme vorteilhaft unterstützt. Die Kraftwirkung des Verbindungselements wird in diesem Fall nämlich nicht nur in axialer Richtung, sondern sowohl in axialer als auch in radialer Richtung in den Implantatkörper und das Aufsatzelement eingebracht. Dem entsprechend erfolgt auch die Dichtwirkung sowohl in axialer und radialer Richtung.

Der im Wesentlichen als Hohlkörper ausgebildete Implantatkörper wird durch den eingesetzten Aufsatzkörper sowie beispielsweise die in ihm verlaufende Befestigungsschraube stabilisiert und gegen eine eventuelle Verformung beim Einschrauben in den Kieferknochen gesichert. Dies ist insbesondere bei schmal ausgeführten Implantatkörpern geringen Durchmessers von Vorteil, da diese durch die Spannungen beim Einschraubvorgang beschädigt werden können.

Zudem ist vorgesehen, dass die Implantatkörperdichtfläche und die Aufsatzelementdichtfläche jeweils zwei Teilflächen aufweisen, nämlich eine erste und zweite Implantatkörperdichtfläche sowie eine erste und eine zweite Aufsatzelementdichtfläche, dass axial zwischen der ersten und der zweiten Aufsatzelementdichtfläche ein Greifabschnitt des Aufsatzelements angeordnet ist, der in einen Aufnahmeabschnitt des Implantatkörpers formschlüssig eingreift, welcher axial zwischen der ersten und der zweiten Implantatkörperdichtfläche angeordnet ist.

Erfindungsgemäß werden die konisch verlaufenden Dichtflächen abdichtend aneinandergelegt, wobei ein axial oberer Dichtabschnitt von einem axial unteren Dichtabschnitt durch einen Formschlussabschnitt getrennt ist.

Hierdurch wird ein Doppelkonus geschaffen, der zwei voneinander baulich getrennte Dichtabschnitte aufweist. Durch zwei Dichtabschnitte - also auch eine Anschlagfläche mit zwei Abschnitten beziehungswiese eine Aufsatzelementanschlagfläche mit zwei Abschnitten, wird die Abdichtungssicherheit quasi verdoppelt und zudem noch mit einem Dichtungselement verbessert.

Besonders vorteilhaft ist es, wenn der Implantatkörper und/oder das Aufsatzelement aus einer Keramik gefertigt ist oder aus einem gesinterten Material gefertigt ist, welches 98-50 Vol.-% an Zirkoniumoxid als Matrix umfasst, oder aus Polyetheretherketon gefertigt ist oder aus Polyetherketonketon gefertigt ist.

Insbesondere ist überraschend erkannt worden, dass ein Implantatkörper, der aus einem gesinterten Material gefertigt ist, welches 98-50 Vol.-% an Zirkoniumoxid als Matrix umfasst, gemeinsam mit einem Gingivaformer als Ganzes in einen Kieferknochen eingeschraubt werden kann, ohne dass der Implantatkörper zerbricht. Weiter ist erkannt worden, dass ein solcher Implantatkörper, der an sich eine relativ raue und poröse Oberfläche aufweist, dennoch eine Dichtfläche aufweist, die an eine andere Dichtfläche abdichtend angelegt werden kann. Auch die Kunststoffe Polyetheretherketon (PEEK) oder Polyetherketonketon (PEKK) eignen sich aufgrund ihrer günstigen Materialeigenschaften für die Herstellung des Implantatkörpers der in vorstehend genannter Weise Dichtflächen aufweisen kann, die abdichtend anlegbar sind.

Es ist überraschend erkannt worden, dass ein solcher Implantatkörper mechanisch stabil genug ist, um einer hohen Drehmomentbelastung von mehr als 30 Ncm Stand zu halten. Solch hohe Drehmomente treten auf, wenn ein Implantatkörper mit einem Gewinde in einen Kieferknochen eingeschraubt wird.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: eine erfindungsgemäße Anordnung, umfassend einen Implantatkörper und einen Gingivaformer, welche durch eine Befestigungsschraube miteinander verbindbar sind, wobei noch ein Abdruckpfosten gezeigt ist, welcher mit dem Gingivaformer verbindbar ist,
- Fig. 2: die Anordnung gemäß Fig. 1 in zusammengefügtem Zustand,
- Fig. 3: eine Schnittansicht des Implantatkörpers der Anordnung gemäß Fig. 1 und 2 mit O-Ring,
- Fig. 4: eine teilweise geschnittene Ansicht des Gingivaformers der Anordnung gemäß Fig. 1 und 2 mit einem ersten keilförmigen Dichtring,
- Fig. 5: eine Schnittansicht des Implantatkörpers der Anordnung gemäß Fig. 1 und 2 mit einem zweiten keilförmigen Dichtring,
- Fig. 6: eine Anordnung, umfassend einen Implantatkörper und ein mit diesem verschraubtes Abutment mit einem O-Ring,
- Fig. 7: ein zweites Abutment mit O-Ring, und
- Fig. 8: eine Schnittansicht eines beispielhaften Implantatkörpers mit einem dritten keilförmigen Dichtring.

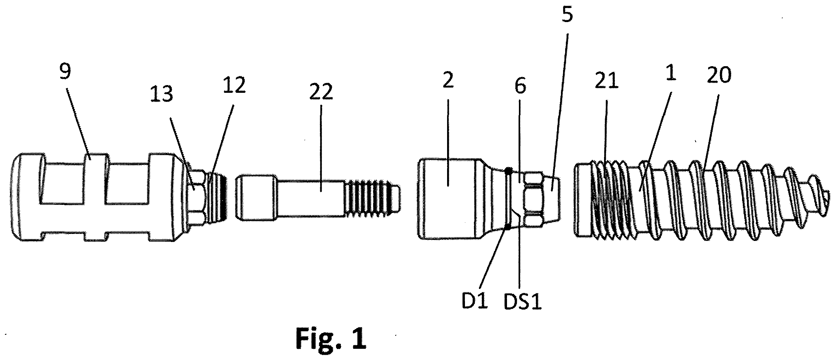

Fig. 1 zeigt eine Anordnung, umfassend einen Implantatkörper 1 und einen Gingivaformer 2 als Aufsatzelement, wobei der Implantatkörper 1 derart komplementär zum Gingivaformer 2 ausgebildet ist, dass der Gingivaformer 2 in den Implantatkörper 1 abschnittsweise einsetzbar ist, wobei der Implantatkörper 1 und der Gingivaformer 2 formschlüssig miteinander verbindbar sind, so dass bei einer Drehung des Gingivaformers 2 eine Drehung des Implantatkörpers 1 erfolgt. Der Gingivaformer 2 weist zudem eine erste konisch verlaufende Gingivaformerdichtfläche 5 als Aufsatzelementanschlagfläche und eine zweite konisch verlaufende Gingivaformerdichtfläche 6 des Gingivaformers 2 als weitere Aufsatzelementanschlagfläche auf, die an entsprechende konisch verlaufende Dichtflächen am Implantatkörper 1 anlegbar sind, wobei die Anschlagflächen des Implantatkörpers 1, die in dem gezeigten Beispiel ebenfalls als Dichtflächen ausgestaltet sind, in der Fig. 1 nicht dargestellt sind und in einer späteren Fig. näher erläutert werden. Außerdem ist ein erster O-Ring D1 als Dichtelement mit kreisförmigem Querschnitt in einer ersten Nut DS1 als Dichtungssitz mit kreisabschnittsförmigem Querschnitt, im gezeigten Beispiel mit halbkreisförmigem Querschnitt gezeigt. Der Implantatkörper 1 weist an seinem apikalen Ende ein Außengewinde 20 auf und an diesem in Richtung des distalen Endes anschließend ein äußeres Mikrogewinde 21.

Der Implantatkörper 1 kann mit einer Befestigungsschraube 22 als Verbindungselement mit den hier beschriebenen Bauteilen verbunden werden.

Der Implantatkörper 1 ist aus einem gesinterten Material gefertigt, welches 98-50 Vol.-% an Zirkoniumoxid als Matrix umfasst. Konkret ist der Implantatkörper 1 aus einem Werkstoff gefertigt, wie er in den Druckschriften EP 2 086 908 B1 und EP 2 089 909 B1 beschrieben ist. Neben diesem expliziten keramischen Werkstoff kommen auch andere keramische Werkstoffe, Metalle, Metalllegierungen oder Kunststoffe für den Implantatkörper 1 oder den Gingivaformer 2 als Aufsatzelement in Betracht.

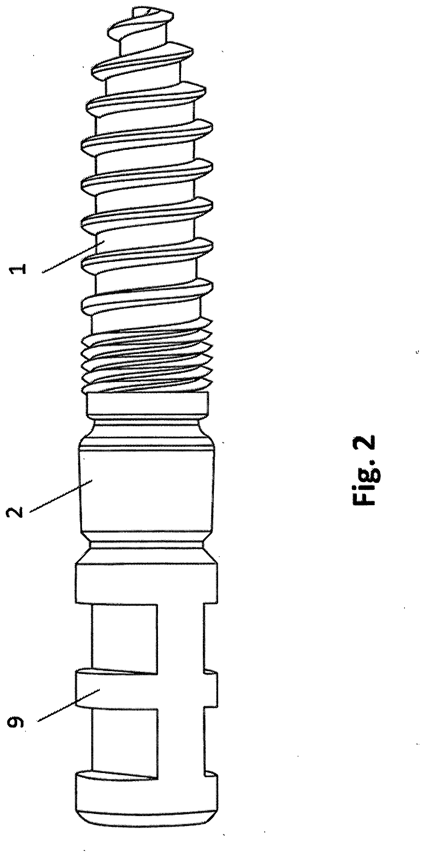

Fig. 2 zeigt die Anordnung gemäß Fig. 1 in zusammengebautem Zustand.

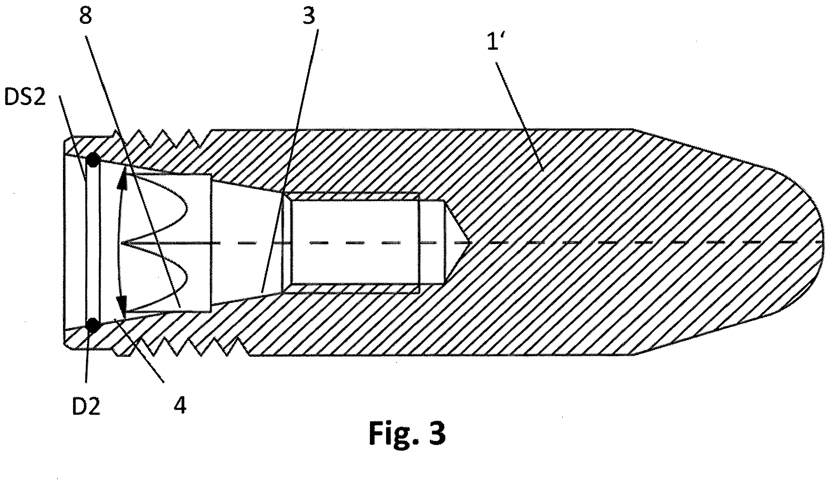

Fig. 3 zeigt, dass ein Implantatkörper 1' eine erste konisch verlaufende Implantatkörperdichtfläche 3 als Anschlagfläche und gleichzeitig als Dichtfläche und eine zweite konisch verlaufende Implantatkörperdichtfläche 4 ebenfalls als Anschlagfläche und gleichzeitig als Dichtfläche aufweist, welche jeweils derart an eine erste konisch verlaufende Gingivaformerdichtfläche 5 als Aufsatzelementanschlagfläche und gleichzeitig als Dichtfläche und eine zweite konisch verlaufende Gingivaformerdichtfläche 6 ebenfalls als Aufsatzelementanschlagfläche und gleichzeitig als Dichtfläche des Gingivaformers 2 anlegbar sind, dass das Innere des Implantatkörpers 1' gegen die Umgebung abgedichtet ist, wobei axial zwischen der ersten und der zweiten Gingivaformerdichtfläche 5, 6 ein Greifabschnitt 7 des Gingivaformers 2 angeordnet ist, der in einen Aufnahmeabschnitt 8 des Implantatkörpers 1 formschlüssig eingreift, welcher axial zwischen der ersten und der zweiten Implantatkörperdichtfläche 3, 4 angeordnet ist. Im Unterschied zu dem Implantatkörper 1 aus Fig. 1 ohne O-Ring weist der Implantatkörper 1' einen zweiten O-Ring D2 als Dichtungselement mit ovalem Querschnitt auf, der in einer zweiten Nut DS2 als Dichtungssitz mit ovalabschnittsförmigen Querschnitt angeordnet ist. Die Anschlagflächen und die Aufsatzelementanschlagflächen sind in diesem Ausführungsbeispiel als Dichtflächen ausgestalte, so dass eine vorgebbare Dichtwirkung zwischen je einer Anschlagfläche / Aufsatzelementanschlagfläche - Anordnung erzielt ist, ohne dass hier eine separate Dichtung zwischen der jeweiligen besagten Flächenanordnung angeordnet ist. Auf diese Wiese erfüllen die Anschlagfläche und die Aufsatzelementanschlagflächen sowohl die Funktion eines Anschlages als auch die Funktion einer Dichtung. Insgesamt weist die gezeigte Beispielanordnung also insgesamt 3 Dichtungen auf, was eine besonders gute und vorteilhafte Dichtwirkung zur Folge hat.

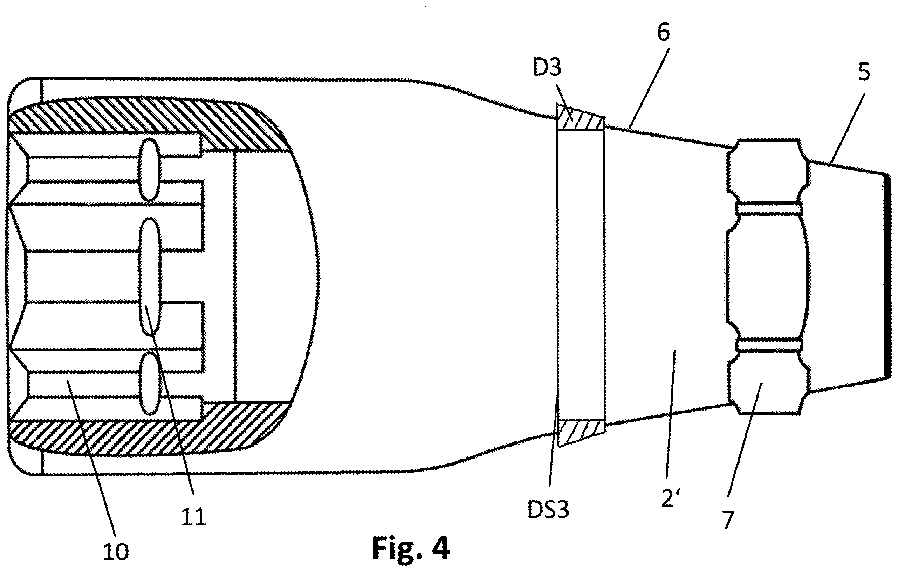

Fig. 4 zeigt ein weiteres Beispiel für die Ausgestaltung eines Gingivaformers 2' als Aufsatzelement bei dem im Bereich der zweiten Gingivaformerdichtfläche 6 eine erster Dichtring D3 als Dichtungselement mit keilförmigem Querschnitt in einer dritten Nut DS3 als Dichtungssitz mit dreieckigem Querschnitt angeordnet ist. In dieser Ausgestaltungsvariante hat der für diese Anordnung vorgesehene Implantatkörper 1 keine weitere Nut als Dichtungssitz im Bereich seiner zweiten Implantatkörperdichtfläche 6. Dementsprechend ist die dritte Nut DS3 eine zweite Dichtfläche, die einer ersten Dichtfläche am Implantatkörper 1 gegenüberliegt, wobei die erste Dichtfläche ein Abschnitt der ersten 5 oder zweiten Gingivaformerdichtfläche 2' ist. Die erste und zweite Dichtfläche zusammen mit dem ersten Dichtring D3 sind zusammen eine Dichtung oder ein Dichtsystem, welches das Innere des Implantats gegen die Umgebung abgedichtet.

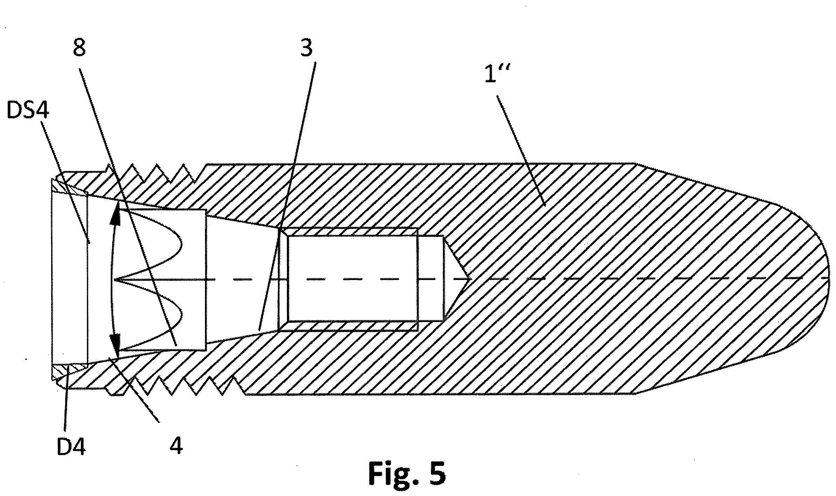

Eine weitere Ausgestaltungsmöglichkeit für ein Dichtungssystem für einen Implantatkörper 1" ist in Fig. 5 gezeigt. Hier ist ein zweiter Dichtring D4 als Dichtungselement in einem vierten Dichtungssitz DS4 angeordnet. Die Besonderheit bei dieser Anordnung liegt darin, dass der zweite Dichtring D4 am zum Aufsatzelement weisenden stirnseitigen Ende des Implantatkörpers angeordnet ist und über dessen Stirnseite übersteht. Der Dichtungssitz DS4 ist als Fase an der stirnseitigen Ausnehmung des Implantatkörpers 1" ausgestaltet. Auf diese Weise ist erreicht, dass beim abschnittsweisen Einsetzen des Aufsatzelements in den Implantatkörper 1" der zweite Dichtring D4 in den vierten Dichtsitz DS4 und gegen das Aufsatzelement gedrückt ist.

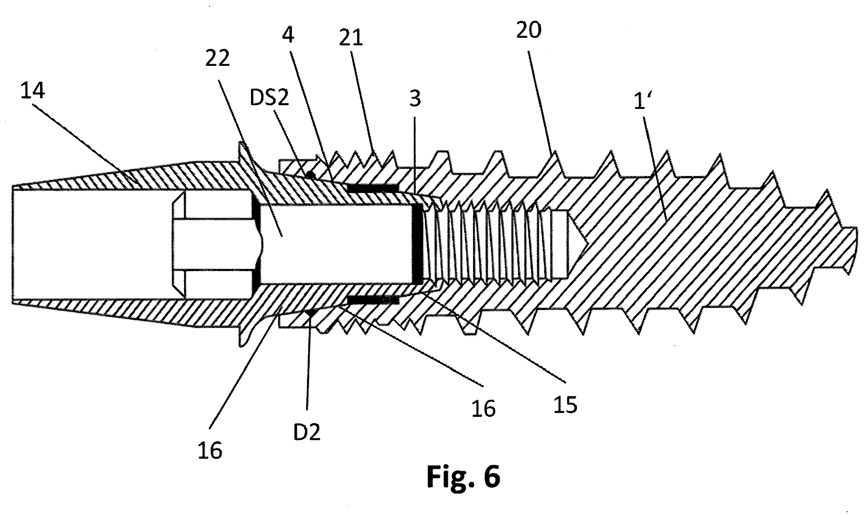

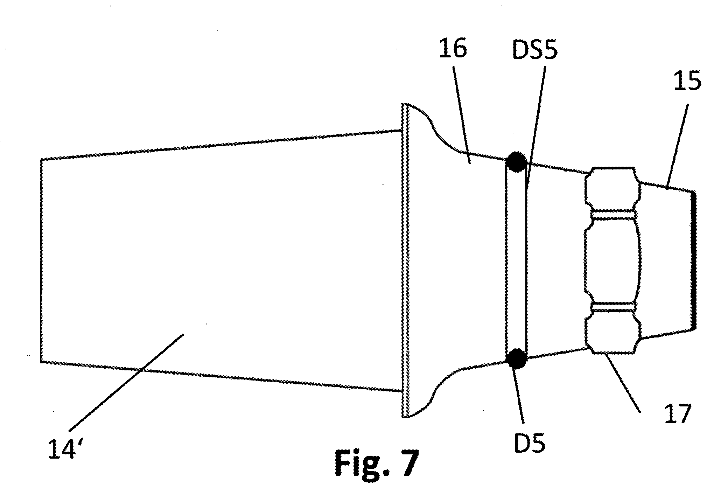

Fig. 6 und 7 zeigen, dass zusätzlich oder alternativ zum Gingivaformer 2 ein Abutment 14, 14' als Aufsatzelement vorgesehen ist, welches in den Implantatkörper 1' abschnittsweise einsetzbar ist, wobei der Implantatkörper 1' und das Abutment 14, 14' formschlüssig miteinander verbindbar sind, wobei der Implantatkörper 1' eine erste und eine zweite konisch verlaufende Implantatkörperdichtfläche 3, 4 aufweist, welche jeweils derart an eine erste konisch verlaufende Abutmentdichtfläche 15 und eine zweite konisch verlaufende Abutmentdichtfläche 16 des Abutments 14, 14' anlegbar sind, dass das Innere des Implantatkörpers 1' gegen die Umgebung abgedichtet ist, wobei axial zwischen der ersten und der zweiten Abutmentdichtfläche 15, 16 ein Greifabschnitt 17 des Abutments 14, 14' angeordnet ist, der in den Aufnahmeabschnitt 8 des Implantatkörpers 1' formschlüssig eingreift. Auch in diesem Beispiel sind die Abutmentdichtflächen 15, 16 als Aufsatzelementanschlagflächen und gleichzeitig als Dichtflächen ausgestaltet.

Der Aufnahmeabschnitt 8 des Implantatkörpers 1 und der Aufnahmeabschnitt 10 des Gingivaformers 2 sind als hexagonale Innenkonturen ausgebildet, in die ein als Sechskant ausgebildeter Greifabschnitt 7 eines Gingivaformers 2, ein Greifabschnitt 17 eines Abutments 14, 14', ein Greifabschnitt 13 eines Abdruckpfostens 9 und/ oder ein Greifabschnitt eines Werkzeugs 18 formschlüssig einfügbar ist.

Zudem ist in der Fig. 6 der zweite O-Ring D2 in seiner zweiten Nut DS2 gezeigt. Die zweite Nut DS2 ist in diesem Beispiel eine erste Dichtfläche, die zusammen mit einer zweiten Dichtfläche, nämlich dem Flächenabschnitt an der konisch verlaufenden zweiten Abutmentdichtfläche 16, die der zweiten Nut DS2 gegenüberliegt, den zweiten O-Ring vollständig umschließt. Der Durchmesser des zweiten O-Rings D2 ist so bemessen, dass dieser, wenn ein Zusammenbau mit dem Aufsatzelement noch nicht erfolgt ist, über die zweite Implantatkörperdichtfläche 4 hinausragt. Nach dem Zusammenbau, wie in Fig. 6 gezeigt, ist der zweite O-Ring D2 so deformiert und so in dem elastischen Bereich seines Materials - hier Polyetheretherketon (PEEK) oder alternativ Polyetherketonketon (PEKK) - verformt, dass die Rückstellkräfte der Verformung eine erforderliche Dichtwirkung erzielen, wobei die Dichtkräfte zwischen der ersten und zweiten Dichtfläche wirken.

Eine alternative Anordnung einer Dichtung am Abutment 14' ist in Fig. 7 gezeigt, wobei ein dritter O-Ring D5 als Dichtungssitz in einer fünften Nut DS5 als Dichtungssitz auf der zweiten Abutmentdichtfläche 16 im Abutment 14' angeordnet ist.

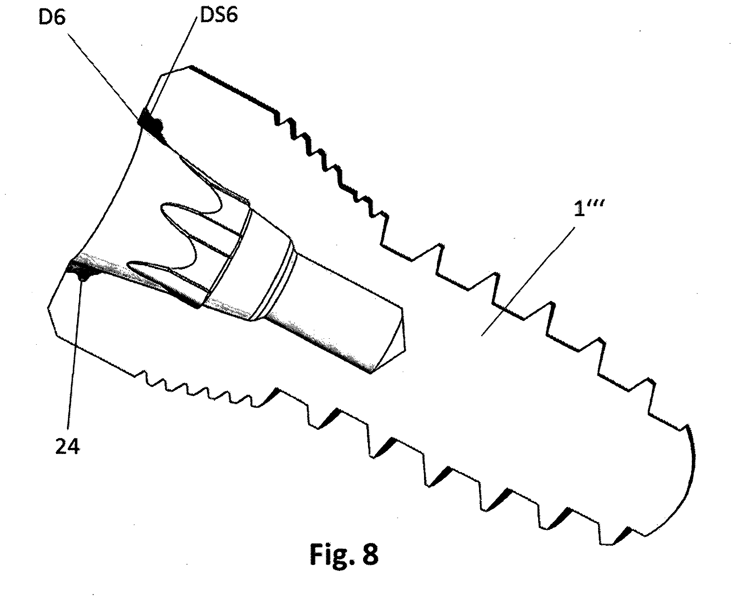

Eine weiteres Beispiel für eine Ausgestaltungsmöglichkeit für ein Dichtungssystem für einen Implantatkörper 1'" ist in Fig. 8 gezeigt. Hier ist ein dritter Dichtring D6 als Dichtungselement in einem sechsten Dichtungssitz DS6 angeordnet. Die Besonderheit bei dieser Anordnung liegt darin, dass auch der dritte Dichtring D6 - ähnlich dem zweiten Dichtring D4 - am zum Aufsatzelement weisenden stirnseitigen Ende des Implantatkörpers 1'" angeordnet ist und über dessen Stirnseite übersteht, jedoch zusätzlich eine Anformung 24 aufweist, die auf der am Implantatkörper 1'" anliegenden Seite des dritten Dichtringes D6 angeordnet ist. Der sechste Dichtungssitz DS6 ist entsprechend als Fase an der stirnseitigen Ausnehmung des Implantatkörpers 1'" ausgestaltet, wobei eine Ausnehmung in der Fläche der Fase zur Aufnahme der Anformung 24 eingebracht ist. Auf diese Weise ist erreicht, dass der dritte Dichtring D6 im sechsten Dichtungssitz DS6 an einer durch die Ausnehmung vorgegebenen Position anbringbar ist und der dritte Dichtring D6 an der Position auch gehalten ist, zum Beispiel bei einem Einsetzten eine Abutments. Zudem drückt dann auch der dritte Dichtring D6 beim abschnittsweisen Einsetzen des Aufsatzelements in den Implantatkörper 1'" in den sechsten Dichtungssitz DS6 und gegen das Aufsatzelement.

### Bezugszeichenliste

- 1, 1', 1", 1'": Implantatkörper
- 2, 2': Gingivaformer als Aufsatzelement
- 3: erste Implantatkörperdichtfläche als Anschlagfläche
- 4: zweite Implantatkörperdichtfläche als Anschlagfläche
- 5: erste Gingivaformerdichtfläche als Aufsatzelementanschlagflä che
- 6: zweite Gingivaformerdichtfläche als Aufsatzelementanschlagflä che
- 7: Greifabschnitt des Gingivaformers
- 8: Aufnahmeabschnitt des Implantatkörpers
- 9: Abdruckpfosten
- 10: Aufnahmeabschnitt des Gingivaformers
- 11: Nut
- 12: Feder
- 13: Greifabschnitt des Abdruckpfostens
- 14, 14': Abutment als Aufsatzelement
- 15: erstes Abutmentdichtfläche als Aufsatzelementanschlagfläche
- 16: zweite Abutmentdichtfläche als Aufsatzelementanschlagfläche
- 17: Greifabschnitt des Abutments
- 18: Werkzeug
- 19: Aufnahmegefäß
- 20: Außengewinde
- 21: Mikrogewinde
- 22: Befestigungsschraube als Verbindungselement
- 24: Anformung
- D1: erster O-Ring als Dichtungselement
- D2: zweiter O-Ring als Dichtungselement
- D3: erster Dichtring als Dichtungselement
- D4: zweiter Dichtring als Dichtungselement
- D5: dritter O-Ring als Dichtungselement
- D6: dritter Dichtring als Dichtungselement
- DS1: erste Nut als erster Dichtungssitz
- DS2: zweite Nut als zweiter Dichtungssitz
- DS3: dritte Nut als dritter Dichtungssitz
- DS4: vierter Dichtungssitz
- DS5: fünfte Nut als fünfter Dichtungssitz
- DS6: sechster Dichtungssitz

## Patentansprüche

1. Anordnung, umfassend einen Implantatkörper (1, 1', 1", 1'") und ein Aufsatzelement (2, 2'), wobei der Implantatkörper (1, 1', 1", 1'") derart komplementär zum Aufsatzelement (2, 2') ausgebildet ist, dass das Aufsatzelement (2, 2', 14, 14') in den Implantatkörper (1, 1', 1", 1'") abschnittsweise bis zu einer Anschlagfläche am Implantatkörper (1, 1', 1", 1'") einsetzbar ist, wobei das Aufsatzelement (2, 2', 14, 14') mit einem Verbindungselement (22) mit dem Implantatkörper (1, 1', 1", 1'") verbunden ist, wobei durch das Verbindungselement eine Aufsatzelementanschlagfläche des Aufsatzelements (2, 2', 14, 14') gegen die Anschlagfläche gehalten ist,
**dadurch gekennzeichnet, dass**
der Implantatkörper (1, 1', 1", 1'") eine erste Dichtfläche aufweist, die einer zweiten Dichtfläche des Aufsatzelements (2, 2', 14, 14') gegenübergelegen ist, dass die erste Dichtfläche oder die zweite Dichtfläche einen Dichtungssitz (DS1, DS2, DS3, DS4, DS5) aufweist, in den ein Dichtungselement (D1, D2, D3, D4, D5) eingesetzt ist, durch das das Innere des Implantatkörpers (1, 1', 1", 1'") gegen die Umgebung abgedichtet ist, dass die Anschlagfläche als Implantatkörperdichtfläche (3, 4) und die Aufsatzelementanschlagfläche als Aufsatzelementdichtfläche (5, 6, 15, 16) ausgestaltet sind, so dass das Innere des Implantatkörpers (1, 1', 1", 1'") gegen die Umgebung abgedichtet ist, und dass die Implantatkörperdichtfläche (3, 4) als konisch verlaufende Implantatkörperdichtfläche (3, 4) ausgestaltet ist, welche derart an die als konisch verlaufend ausgestaltete Aufsatzelementdichtfläche (5, 6, 15, 16) anlegbar ist, dass das Innere des Implantatkörpers (1, 1', 1", 1'") gegen die Umgebung abgedichtet ist.

2. Anordnung nach Anspruch 1, **dadurch gekennzeichnet, dass** das Aufsatzelement ein Gingivaformer (2, 2', 14, 14'), ein Abdruckpfosten (9), ein Abutment (14, 14'), eine Abdeckung oder eine Abdeckschraube ist.

3. Anordnung nach Anspruch 1 oder 2, **dadurch gekennzeichnet, dass** die Dichtung (D1, D2, D3, D4, D5) von der ersten Dichtfläche und der zweiten Dichtfläche vollständig umschlossen ist.

4. Anordnung nach einem der vorgenannten Ansprüche, **dadurch gekennzeichnet, dass** das Dichtungselement ein O-Ring (D1, D2, D5) oder ein Dichtring (D3, D4) mit einem in etwa keilförmigen Querschnitt ist, und dass der Dichtungssitz (DS1, DS2, DS3, DS4, DS5) eine ringförmige Nut (11) ist, deren Querschnitt auf das Dichtungselement (D1, D2, D3, D4, D5) angepasst ist.

5. Anordnung nach einem der vorgenannten Ansprüche, **dadurch gekennzeichnet, dass** die Form des Dichtungssitzes (DS1, DS2, DS3, DS4, DS5) und die Form des Dichtungselements (D1, D2, D3, D4, D5) so aufeinander angepasst sind, dass eine elastische Verformung des Dichtungselements (D1, D2, D3, D4, D5) bei einem Zusammenbau von Implantatkörper (1, 1', 1", 1'") und Aufsatzelement (2, 2', 14, 14') gewährleistet ist, und dass durch die elastische Verformung die Dichtkraft in axialer und/oder in radialer Richtung in den Implantatkörper (1, 1', 1", 1'") und in das Aufsatzelement (2, 2', 14, 14') eingebracht ist.

6. Anordnung nach Anspruch 5, **dadurch gekennzeichnet, dass** durch das Verbinden des Aufsatzelements (2, 2', 14, 14') mit dem Implantatkörper (1, 1', 1", 1'") die Dichtkraft aufbringbar ist.

7. Anordnung nach Anspruch 5 oder 6, **dadurch gekennzeichnet, dass** durch die Materialwahl des Dichtungselements (D1, D2, D3, D4, D5) und/oder die Anpassung der Größe und/oder Form des Dichtungssitzes (DS1, DS2, DS3, DS4, DS5) auf das Dichtungselement (D1, D2, D3, D4, D5) und/oder die Anpassung der Größe oder Form des Dichtungselements (D1, D2, D3, D4, D5) auf den Dichtungssitz (DS1, DS2, DS3, DS4, DS5) eine gewünschte Dichtkraft vorgebbar ist.

8. Anordnung nach einem der vorgenannten Ansprüche, **dadurch gekennzeichnet, dass** die Dichtung aus Polyetheretherketon oder aus Polyetherketonketon gefertigt ist.

9. Anordnung nach einem der vorgenannten Ansprüche, **dadurch gekennzeichnet, dass** der Implantatkörper (1, 1', 1") und das Aufsatzelement (2, 2', 14, 14') formschlüssig miteinander verbindbar sind, so dass bei einer Drehung des Aufsatzelements (2, 2', 14, 14') eine Drehung des Implantatkörpers (1, 1', 1", 1'") erfolgt.

10. Anordnung nach einem der vorgenannten Ansprüche, **dadurch gekennzeichnet, dass** die Implantatkörperdichtfläche (3, 4) und die Aufsatzelementdichtfläche (5, 6, 15, 16) jeweils zwei Teilflächen aufweisen, nämlich eine erste und zweite Implantatkörperdichtfläche (3, 4) sowie eine erste und eine zweite Aufsatzelementdichtfläche (5, 6, 15, 16), dass axial zwischen der ersten und der zweiten Aufsatzelementdichtfläche (5, 6) ein Greifabschnitt des Aufsatzelements (17) angeordnet ist, der in einen Aufnahmeabschnitt des Implantatkörpers (8) formschlüssig eingreift, welcher axial zwischen der ersten und der zweiten Implantatkörperdichtfläche (3, 4) angeordnet ist.

## Claims

1. Arrangement comprising an implant body (1, 1', 1", 1"') and an attachment element (2, 2'), wherein the implant body (1, 1', 1", 1"') is designed matching the attachment element (2, 2') in such a way that the attachment element (2, 2', 14, 14') is partially insertable into the implant body (1, 1', 1", 1"') as far as a stop surface on the implant body (1, 1', 1", 1"'), wherein the attachment element (2, 2', 14, 14') is connected to the implant body (1, 1', 1", 1"') by a connection element (22), wherein an attachment element stop surface of the attachment element (2, 2', 14, 14') is held against the stop surface by the connection element,
**characterized in that**
the implant body (1, 1', 1", 1"') has a first sealing surface, which is located opposite a second sealing surface of the attachment element (2, 2', 14, 14'), **in that** the first sealing surface or the second sealing surface has a sealing seat (DS1, DS2, DS3, DS4, DS5) into which a sealing element (D1, D2, D3, D4, D5) is inserted by which the interior of the implant body (1, 1', 1", 1"') is sealed off from the environment, **in that** the stop surface is configured as implant body sealing surface (3, 4) and the attachment element stop surface is configured as attachment element sealing surface (5, 6, 15, 16), such that the interior of the implant body (1, 1', 1", 1"') is sealed off from the environment, and **in that** the implant body sealing surface (3, 4) is configured as a conically extending implant body sealing surface (3, 4), which can be applied to the conically extending attachment element sealing surface (5, 6, 15, 16) in such a way that the interior of the implant body (1, 1', 1", 1"') is sealed off from the environment.

2. Arrangement according to Claim 1, **characterized in that** the attachment element is a gingiva former (2, 2', 14, 14'), an impression post (9), an abutment (14, 14'), a covering or a cover screw.

3. Arrangement according to Claim 1 or 2, **characterized in that** the seal (D1, D2, D3, D4, D5) is completely enclosed by the first sealing surface and the second sealing surface.

4. Arrangement according to one of the preceding claims, **characterized in that** the sealing element is an O-ring (D1, D2, D5) or a sealing ring (D3, D4) with an approximately wedge-shaped cross section, and **in that** the sealing seat (DS1, DS2, DS3, DS4, DS5) is an annular groove (11) whose cross section is adapted to the sealing element (D1, D2, D3, D4, D5).

5. Arrangement according to one of the preceding claims, **characterized in that** the shape of the sealing seat (DS1, DS2, DS3, DS4, DS5) and the shape of the sealing element (D1, D2, D3, D4, D5) are adapted to each other such that an elastic deformation of the sealing element (D1, D2, D3, D4, D5) is ensured when implant body (1, 1', 1", 1"') and attachment element (2, 2', 14, 14') are joined together, and **in that** the sealing force is introduced axially and/or radially into the implant body (1, 1', 1", 1'") and into the attachment element (2, 2', 14, 14') by the elastic deformation.

6. Arrangement according to Claim 5, **characterized in that** the sealing force can be applied by connecting the attachment element (2, 2', 14, 14') to the implant body (1, 1', 1", 1'").

7. Arrangement according to Claim 5 or 6, **characterized in that** a desired sealing force can be predefined by the choice of material of the sealing element (D1, D2, D3, D4, D5) and/or by the adaptation of the size and/or shape of the sealing seat (DS1, DS2, DS3, DS4, DS5) to the sealing element (D1, D2, D3, D4, D5) and/or by the adaptation of the size or shape of the sealing element (D1, D2, D3, D4, D5) to the sealing seat (DS1, DS2, DS3, DS4, DS5).

8. Arrangement according to one of the preceding claims, **characterized in that** the seal is produced from polyether ether ketone or from polyether ketone ketone.

9. Arrangement according to one of the preceding claims, **characterized in that** the implant body (1, 1', 1") and the attachment element (2, 2', 14, 14') are connectable to each other with form-fit engagement, such that a rotation of the implant body (1, 1', 1", 1"') takes place during a rotation of the attachment element (2, 2', 14, 14').

10. Arrangement according to one of the preceding claims, **characterized in that** the implant body sealing surface (3, 4) and the attachment element sealing surface (5, 6, 15, 16) each have two part-surfaces, namely a first and a second implant body sealing surface (3, 4) and a first and a second attachment element sealing surface (5, 6, 15, 16), **in that** a grip portion of the attachment element (17) is arranged axially between the first and the second attachment element sealing surface (5, 6) and sits with form-fit engagement in a receiving portion of the implant body (8) which is arranged axially between the first and the second implant body sealing surface (3, 4).

## Revendications

1. Ensemble, comprenant un corps d'implant (1, 1', 1", 1"') et un élément rapporté (2, 2'), dans lequel le corps d'implant (1, 1', 1", 1"') est réalisé de manière complémentaire à l'élément rapporté (2, 2') de telle sorte que l'élément rapporté (2, 2', 14, 14') peut être inséré dans le corps d'implant (1, 1', 1", 1"') par sections jusqu'à une surface de butée sur le corps d'implant (1, 1', 1", 1"'), l'élément rapporté (2, 2', 14, 14') étant relié à un élément de liaison (22) au corps d'implant (1, 1', 1", 1"'), dans lequel l'élément de liaison retient une surface de butée d'élément rapporté de l'élément rapporté (2, 2', 14, 14') contre la surface de butée,
**caractérisé en ce que** le corps d'implant (1, 1', 1", 1"') présente une première surface d'étanchéité qui fait face à une deuxième surface d'étanchéité de l'élément rapporté (2, 2', 14, 14'), **en ce que** la première surface d'étanchéité ou la deuxième surface d'étanchéité présente un siège de joint (DS1, DS2, DS3, DS4, DS5) dans lequel est inséré un élément de joint (D1, D2, D3, D4, D5) par lequel l'intérieur du corps d'implant (1, 1', 1", 1"') est rendu étanche par rapport à l'environnement, **en ce que** la surface de butée est configurée comme une surface d'étanchéité de corps d'implant (3, 4) et la surface de butée d'élément rapporté est configurée comme une surface d'étanchéité d'élément rapporté (5, 6, 15, 16) de sorte que l'intérieur du corps d'implant (1, 1', 1", 1"') est rendu étanche par rapport à l'environnement, et **en ce que** la surface d'étanchéité de corps d'implant (3, 4) est configurée comme une surface d'étanchéité de corps d'implant (3, 4) d'extension conique qui peut être appliquée à la surface d'étanchéité d'élément rapporté (5, 6, 15, 16) configurée en ayant une extension conique de telle sorte que l'intérieur du corps d'implant (1, 1', 1", 1"') est rendu étanche par rapport à l'environnement.

2. Ensemble selon la revendication 1, **caractérisé en ce que** l'élément rapporté est un façonneur gingival (2, 2', 14, 14), un pilier d'empreinte (9), un pilier (14, 14'), un obturateur ou une vis d'obturation.

3. Ensemble selon la revendication 1 ou 2, **caractérisé en ce que** le joint (D1, D2, D3, D4, D5) est entouré complètement par la première surface d'étanchéité et la deuxième surface d'étanchéité.

4. Ensemble selon l'une quelconque des revendications précédentes, **caractérisé en ce que** l'élément de joint est un joint torique (D1, D2, D5) ou une bague d'étanchéité (D3, D4) de section transversale approximativement conique, et **en ce que** le siège de joint (DS1, DS2, DS3, DS4, DS5) est une rainure annulaire (11) dont la section transversale est adaptée à l'élément de joint (D1, D2, D3, D4, D5).

5. Ensemble selon l'une quelconque des revendications précédentes, **caractérisé en ce que** la forme du siège de joint (DS1, DS2, DS3, DS4, DS5) et la forme de l'élément de joint (D1, D2, D3, D4, D5) sont adaptées l'une à l'autre de telle sorte qu'une déformation élastique de l'élément de joint (D1, D2, D3, D4, D5) est assurée lors d'un assemblage du corps d'implant (1, 1', 1", 1"') et de l'élément rapporté (2, 2', 14, 14'), et **en ce que** la déformation élastique introduit la force d'étanchéité dans la direction axiale et/ou radiale dans le corps d'implant (1, 1', 1", 1"') et dans l'élément rapporté (2, 2', 14, 14').

6. Ensemble selon la revendication 5, **caractérisé en ce que** la liaison de l'élément rapporté (2, 2', 14, 14') au corps d'implant (1, 1', 1", 1"') permet d'exercer la force d'étanchéité.

7. Ensemble selon la revendication 5 ou 6, **caractérisé en ce que** le choix du matériau de l'élément de joint (D1, D2, D3, D4, D5) et/ou l'adaptation de la taille et/ou de la forme du siège de joint (DS1, DS2, DS3, DS4, DS5) à l'élément de joint (D1, D2, D3, D4, D5) et/ou l'adaptation de la taille ou de la forme de l'élément de joint (D1, D2, D3, D4, D5) au siège de joint (DS1, DS2, DS3, DS4, DS5) permet de spécifier une force d'étanchéité souhaitée.

8. Ensemble selon l'une quelconque des revendications précédentes, **caractérisé en ce que** le joint est fabriqué en polyétheréthercétone ou en polyéthercétonecétone.

9. Ensemble selon l'une quelconque des revendications précédentes, **caractérisé en ce que** le corps d'implant (1, 1', 1") et l'élément rapporté (2, 2', 14, 14') peuvent être reliés l'un à l'autre par complémentarité de forme de sorte qu'en cas de rotation de l'élément rapporté (2, 2', 14, 14') une rotation du corps d'implant (1, 1', 1", 1"') est effectuée.

10. Ensemble selon l'une quelconque des revendications précédentes, **caractérisé en ce que** la surface d'étanchéité de corps d'implant (3, 4) et la surface d'étanchéité d'élément rapporté (5, 6, 15, 16) présentent respectivement deux surfaces partielles, notamment une première et une deuxième surface d'étanchéité de corps d'implant (3, 4) ainsi qu'une première et une deuxième surface d'élément rapporté (5, 6, 15, 16), **en ce qu'**une partie de préhension de l'élément rapporté (17) est disposée axialement entre la première et la deuxième surface d'étanchéité d'élément rapporté (5, 6) et vient en prise avec une partie de réception du corps d'implant (8) par complémentarité de forme qui est disposée axialement entre la première et la deuxième surface d'étanchéité de corps d'implant (3, 4).
